# EUROPÄISCHE PATENTANMELDUNG

(11) **EP 1 318 333 A2**
(43) Veröffentlichungstag der Anmeldung: **11.06.2003**
(21) Anmeldenummer: 02027271.2
(22) Anmeldetag: 06.12.2002
(51) Int. Cl.: F16H 61/04

(54) **Verfahren zur Verbesserung der Qualität von Rückschaltvorgängen**

(30) Priorität: 08.12.2001 DE 10160443
(71) Anmelder: Voith Turbo GmbH & Co. KG, 89522 Heidenheim (DE)
(72) Erfinder: Rotter, Erwin, 89564 Nattheim (DE); Schönhaar, Thomas, 89555 Steinheim (DE)
(74) Vertreter: Dr. Weitzel & Partner

(57) **Zusammenfassung**

Die Erfindung betrifft ein Verfahren zur Verbesserung der Qualität von Rückschaltvorgängen zwischen zwei unterschiedlichen Übersetzungsstufen durch Betätigung von miteinander in Wirkverbindung bringbaren Reibelementen in Fahrzeuggetrieben in Antriebssträngen mit wenigstens noch einer Antriebsmaschine.

Die Erfindung ist gekennzeichnet durch die folgenden Merkmale:
- bei Vorlage einer, den aktuellen Lastzustand von 0 wenigstens mittelbar charakterisierenden Größe und gelöster Wirkverbindung der Reibelemente der zu verlassenden Übersetzungsstufe wird eine, das Beschleunigungsverhalten der Antriebsmaschine wenigstens mittelbar charakterisierende Größe für wenigstens einen bestimmten vorgebbaren Referenzzeitraum ermittelt und mit einem Referenzwert für die die Beschleunigung wenigstens mittelbar charakterisierende Größe verglichen;
- bei Vorliegen einer Abweichung zwischen der das Beschleunigungsverhalten der Antriebsmaschine wenigstens mittelbar charakterisierenden Größe und dem Referenzwert, welche auf ein Nichterreichen des erforderlichen Drehzahlwertes in der zweiten einzustellenden Übersetzungsstufe hindeutet, wird die Stellgröße für die Realisierung der Wirkverbindung der Reibelemente derart beeinflußt bzw. eingestellt, daß die Antriebsmaschine vom Abtrieb hochgezogen wird.

## Beschreibung

Die Erfindung betrifft ein Verfahren zur Verbesserung der Qualität von Rückschaltvorgängen zwischen zwei unterschiedlichen Übersetzungsstufen durch Betätigung von miteinander in Wirkverbindung bringbaren Reibelementen in Fahrzeuggetrieben in Antriebssträngen mit wenigstens noch einer Antriebsmaschine, im einzelnen mit den Merkmalen aus dem Oberbegriff des Anspruchs 1.

Verfahren zum Betreiben bzw. zur Steuerung von automatischen Fahrzeuggetrieben sind aus einer Vielzahl von Druckschriften bekannt. Stellvertretend seien die nachfolgenden Druckschriften genannt:
1. DE 19 32 986 C3
2. DE 32 05 767 C2

Aus diesen Druckschriften ist es bekannt, bei automatischen Fahrzeuggetrieben den Druck des Arbeitsmediums, welches zur Betätigung der miteinander in Wirkverbindung bringbaren Reibelemente des Getriebes dient, in Abhängigkeit von verschiedenen Betriebsparametern des Kraftfahrzeuges einzustellen. Bei dem aus der DE 19 32 986 C3 offenbarten Verfahren erfolgt dabei die Druckeinstellung über eine elektronische Steuerung über vorgebbare Druckkennlinien. Allgemein werden für die Realisierung von sogenannten Rückschaltvorgängen zwischen zwei unterschiedlichen Übersetzungsstufen ― einer ersten, sogenannten Ausgangs- bzw. gehenden Übersetzungsstufe und einer zweiten, sogenannten Ziel- bzw. kommenden Übersetzungsstufe ― zwei Steuerungsmodelle unterschieden. Bei Rückschaltvorgängen weist die mit dem Getriebe koppelbare Antriebsmaschine in der sogenannten gehenden Übersetzungsstufe unter der Voraussetzung gleicher übertragbarer Leistung eine geringere Drehzahl als in der kommenden Übersetzungsstufe auf. Die beiden bekannten Steuerungsmodelle werden wahlweise in Abhängigkeit der aktuellen Lastgeberstellung ― Nullast oder Vollast ― eingesetzt. Gemäß der ersten Schaltstrategie, welche für sogenannte Nullastschaltungen, insbesondere Nullastrückschaltungen zum Einsatz gelangt, muß die Antriebsmaschine, in der Regel eine Verbrennungskraftmaschine, durch den Abtrieb, d. h. die mit dem Fahrzeuggetriebe gekoppelten Elemente über das Getriebe auf die dem Stufensprung entsprechendende höhere Motordrehzahl beschleunigt werden. Im anderen Fall, bei Vorliegen einer, die aktuelle Lastgeberstellung von (ungleich) Null charakterisierenden Größe, beschleunigt die Antriebsmaschine selbst auf die nach der Schaltung höhere Motordrehzahl. Verwirklicht werden diese beiden Schaltstrategien durch Beeinflussung der die miteinander in Wirkverbindung bringbaren Reibelemente wenigstens mittelbar beaufschlagenden Stellgröße. Als Stellgröße fungiert dabei in der Regel der Betätigungsdruck, welcher vorzugsweise elektro-hydraulisch erzeugt wird. Bei den bisher bekannten Verfahren zur Rückschaltung zwischen zwei unterschiedlichen Übersetzungsstufen in Fahrzeuggetrieben erfolgte bisher die Auswahl des Schaltungsablaufes für eine Rückschaltung nur in Abhängigkeit einer, die aktuelle Lastgeberstellung wenigstens mittelbar charakterisierenden Größe und einer das aktuelle Motormoment wenigstens mittelbar charakterisierenden Größe. Dies führt jedoch für Antriebsmaschinen in Form von Verbrennungskraftmaschinen mit Turboladern zu sehr schlechten Schaltungen, da insbesondere die Teillastschaltungen bei sehr niedrigen Motordrehzahlen wie eine Nullastschaltung ausgeführt werden sollten und erst bei höheren Motordrehzahlen wie eine Vollastschaltung. Die erforderliche Zieldrehzahl in der neuen einzustellenden Übersetzungsstufe wird dabei nur schwer oder erst nach einem erheblich längeren Zeitraum erreicht. Die Schaltung erfolgt somit nicht weich sondern mit Störungen und kann unter Umständen auch länger andauern.

Der Erfindung liegt daher die Aufgabe zugrunde, ein Verfahren zur Verbesserung der Schaltqualität bei Rückschaltvorgängen in Fahrzeuggetrieben, insbesondere Automatikgetrieben, in Antriebssträngen mit wenigstens noch einer Antriebsmaschine derart weiter zu entwickeln, daß die genannten Nachteile vermieden werden. Insbesondere sind die zeitweise sich einstellenden unbefriedigenden Schaltverläufe mit einfachen Mitteln, geringem konstruktivem und steuerungstechnischem Aufwand zu vermeiden.

Die erfindungsgemäße Lösung der Aufgabe ist durch die Merkmale des Anspruchs 1 charakterisiert. Vorteilhafte Ausgestaltungen sind in den Unteransprüchen beschrieben.

Erfindungsgemäß wird bei einer Rückschaltung zwischen zwei Übersetzungsstufen durch Betätigung von miteinander in Wirkverbindung bringbaren Reibelementen in Fahrzeuggetrieben eines Antriebsstranges mit wenigstens noch einer Antriebsmaschine, bei welchem in Abhängigkeit einer den aktuellen Lastzustand wenigstens mittelbar charakterisierenden Größe nach Lösung der Wirkverbindung der Reibelemente der zu verlassenden Übersetzungsstufe wenigstens eine Stellgröße zur Beaufschlagung der Reibelemente der gewünschten einzustellenden zweiten Übersetzungsstufe gebildet wird, bei Vorliegen einer den aktuellen Lastzustand wenigstens mittelbar beschreibenden Größe, die eine Lastzustand von 0 charakterisiert und nach Lösung der miteinander in Wirkverbindung stehenden Reibelemente der zu verlassenden Übersetzungsstufe wenigstens eine, das Beschleunigungsverhalten der Antriebsmaschine wenigstens mittelbar charakterisierende Größe erfaßt und mit einem vorgebbarem oder berechneten Referenzwert verglichen. Der Referenzwert stellt ein Maß dafür da, ob die Beschleunigung der Antriebsmaschine ausreichend ist, die Antriebsmaschine auf die erforderliche Drehzahl im einzustellenden Gang zu bringen. Wird dieser Referenzwert nicht erreicht, bzw. deutet die Abweichung zwischen dem aktuellen Wert und dem Referenzwert darauf hin, daß die Beschleunigung der Antriebsmaschine nicht ausreicht, wird die Stellgröße zur Beaufschlagung der Reibelemente derart beeinflußt bzw. eingestellt, daß die Antriebsmaschine über die Koppelung des Getriebes mit dem Abtrieb auf die entsprechende erforderliche Drehzahl hochgezogen wird. Als Auswahlkriterium wird nunmehr nicht mehr nur die Lastgeberstellung bzw. das Motormoment für die zu verfolgende Schaltstrategie verwendet, sondern die Beschleunigung der Antriebsmaschine selbst, welche vorzugsweise als Verbrennungskraftmaschine ausgeführt ist. Bei einem aktuellen Lastzustand von 0, das heißt beispielsweise einer Lastgeberstellung >0 wird dabei immer wie bei einer sogenannten Vollastschaltung begonnen. Dies bedeutet, daß die Antriebsmaschine, insbesondere die Verbrennungskraftmaschine, nach Öffnen der noch geschlossenen Wirkverbindung der Reibelemente, welche der zu verlassenden Übersetzungsstufe zugeordnet sind bzw. den miteinander in Eingriff bringbaren Getriebeelementen der zu verlassenden Übersetzungsstufe, vom Antriebsstrang freigeschaltet wird und ihre Drehzahl erhöhen oder verringern kann. Der Drehzahlverlauf der Antriebsmaschine bestimmt dann den Druckanstieg der miteinander in Wirkverbindung bringbaren Reibelemente zur Realisierung der gewünschten zweiten Übersetzungsstufe. Reicht die Beschleunigung der Antriebsmaschine aus, diese in der entsprechenden Schaltzeit auf die dem nächsten Gang entsprechend höhere Drehzahl zu beschleunigen, so wird diese Schaltung wie eine Vollastschaltung behandelt, d. h. die Antriebsmaschine beschleunigt selbst auf die nach der Schaltung vorliegende bzw. geforderte höhere Drehzahl. Ist jedoch die Beschleunigung der Antriebsmaschine zu gering, wird eine sogenannte Nullastschaltung eingeleitet. Dies bedeutet, daß die Antriebsmaschine über den Abtrieb auf die entsprechend geforderte Drehzahl in der nächsten Übersetzungsstufe hochgezogen wird. Die Antriebsmaschine ist vorzugsweise als Verbrennungskraftmaschine in Form eines Otto- oder Dieselmotors ausgeführt. Die miteinander in Wirkverbindung bringbaren Reibelemente bilden in der Regel eine reibschlüssige Kupplung, denkbar ist jedoch auch eine Ausführung als Bremseinrichtung.

Die erfindungsgemäße Lösung ermöglicht es, das Gesamtschaltverhalten eines automatischen Fahrzeuggetriebes der eingangs genannten Art weicher zu gestalten. Störungen im Schaltverhalten und Verzögerungen können somit nahezu vermieden werden.

Vorzugsweise wird als die, das Beschleunigungsverhalten der Antriebsmaschine wenigstens mittelbar charakterisierende Größe die Drehzahl der Antriebsmaschine angesehen. Diese wird vorzugsweise fortlaufend überwacht. Aus der ermittelbaren bzw. erfassbaren Drehzahl über einen bestimmten Referenzzeitraum läßt sich dann das Beschleunigungsverhalten nach einfacher Art und Weise ableiten. Eine weitere zweite Möglichkeit zur Ableitung des Beschleunigungsverhaltens der Antriebsmaschine besteht darin, lediglich zu überprüfen, ob nach Ablauf einer bestimmten Referenzzeitdauer eine bestimmte vorgebbare bzw. definierbare Drehzahl der Antriebsmaschine erzielt wird. Während im erstgenannten Fall wenigstens in bestimmten Intervallen eine Erfassung der aktuellen Drehzahl der Antriebsmaschine erforderlich ist, kann im zweiten Fall eine einmalige Erfassung der Drehzahl der Antriebsmaschine genügen, weshalb letztere Variante zu bevorzugen ist.

Die Betätigung der miteinander in Wirkverbindung bringbaren Reibelemente erfolgt in der Regel durch Aufbringen eines elektro-hydraulisch erzeugbaren Steuerdruckes. Für diesen wird in der Regel ein entsprechender Druckverlauf eingestellt. Der Druckverlauf ist dabei durch die Vorgabe eines entsprechenden Anfangsdruckwertes und eines Regeldruckwertes charakterisiert. Deren Verläufe bestimmen die Qualität des Schaltvorganges während einer Rückschaltung von einer ersten Übersetzungsstufe in eine zweite Übersetzungsstufe. Beide Druckwerte können einzeln bzw. separat zueinander oder parallel beeinflußt werden. Die Beeinflussung der einzelnen, den Steuerdruck charakterisierenden Druckwerte kann dabei durch folgende Maßnahmen erfolgen:
a) Steuerung
b) Adaptive Steuerung
c) Regelung

Diese einzelnen Möglichkeiten können zusätzlich noch miteinander kombiniert in Anwendung gebracht werden. Die konkrete Auswahl steht jedoch im Ermessen des auf dem Gebiet der Auslegung von Steuerungen tätigen Fachmannes. Insbesondere spielt dabei eine Rolle, welchen weiteren Anforderungen im Bezug auf den Verlauf des Schaltvorganges Rechnung getragen werden muß. Durch die Überwachung der Schaltvorgänge besteht die Möglichkeit, aus einer Vielzahl von Schaltvorgängen gleichen Typs, das heißt von einer identischen ersten Übersetzungsstufe zu einer identischen zweiten Übersetzungsstufe, entsprechende Kennlinien abzuleiten und diese für weitere Schaltvorgänge gleichen Typs als Grundlage zu verwenden.

Die adaptive Beeinflußbarkeit des Steuerdruckes ist dadurch charakterisiert, daß bei Abweichung des Ist-Wertes von einem Soll-Wert der Steuerdruck zur elektro-hydraulischen Beaufschlagung der Reibelemente zur wenigstens mittelbaren Beeinflussung der den Schaltvorgang charakterisierenden Größe um einen bestimmten berechen- oder auch vorgebbaren ersten Korrekturwert adaptiv zur Erzielung eines optimalen Schaltverlaufes geändert und der Verlauf der geänderten Größe jeweils als neue Kennlinie der Sollwerte abspeicherbar ist. Die neue Sollwert-Kennlinie bildet dabei die Grundlage für den nächsten Schaltvorgang gleichen Typs.

Bei der Steuerung wird der Steuerdruck zur elektro-hydraulischen Beaufschlagung des Reibelementes zur wenigstens mittelbaren Beeinflussung der den Schaltvorgang wenigstens mittelbar charakterisierenden Größe um einen entsprechend der Abweichung vordefinierbaren Wert verändert. Die Steuerung wird dabei nur bei Vorliegen einer Abweichung vorgenommen und die Anpassung des Steuerdruckes erfolgt immer direkt in Abhängigkeit der konkreten Gegebenheiten.

Eine bevorzugte Ausführung besteht jedoch darin, den Steuerdruck während dieser Schaltvorgänge direkt zu regeln. In diesem Fall wird das Beschleunigungsverhalten der Antriebsmaschine in einem gewissen Referenzzeitraum erfaßt und durch ständige Rückführung über die Beeinflußbarkeit des Steuerdruckes zur elektro-hydraulischen Beaufschlagung der Reibelemente an die Erfordernisse des entsprechenden Rückschaltvorganges direkt angepaßt. Dies setzt jedoch voraus, daß eine, wenigstens zeitweise Überwachung des Beschleunigungsverhaltens vorgenommen wird. Dazu bedarf es einer ständigen Überwachung der Drehzahl der Antriebsmaschine, wenigstens jedoch in einem bestimmten Referenzzeitraum-Intervall.

Vorrichtungsmäßig ist dazu einer Antriebsvorrichtung eine entsprechende Steuervorrichtung zugeordnet, die neben einer Steuereinrichtung je nach gewünschter Strategie zur Beeinflußbarkeit des Steuerdruckes eine Regeleinrichtung umfassen kann. Die Steuervorrichtung selbst weist wenigstens zwei Eingänge auf, einen ersten Eingang zur Erfassung eines Signales einer den aktuellen Lastzustand wenigstens mittelbar charakterisierenden Größe und einen zweiten Eingang zur Erfassung einer
das Beschleunigungsverhalten der Antriebsmaschine wenigstens mittelbar charakterisierenden Größe. Des weiteren ist wenigstens ein Ausgang vorgesehen, welcher in der Regel mit der Einrichtung zur Erzeugung des
erforderlichen Steuerdruckes gekoppelt ist und an welchem eine Stellgröße zur Beeinflussung des Steuerdruckes ausgegeben wird. Der erste Eingang ist dabei vorzugsweise an einen sogenannten Lastgeber (Motormoment- Ausgang der Einspritzpumpe) gekoppelt und der zweite Eingang an eine Einrichtung zur Drehzahlerfassung der Antriebsmaschine. Der Ausgang ist mit einer Einrichtung zur Beeinflussung des an die miteinander in Wirkverbindung bringbaren Reibelementen anlegbaren Steuerdruckes verbunden. Die Steuereinrichtung umfaßt desweiteren eine Vergleichseinrichtung, in welcher die Eingangsgrößen verarbeitet werden und aus der Abweichung zwischen der die Beschleunigung der Antriebsmaschine wenigstens mittelbar charakterisierenden Größe und einem bestimmten Referenzzeitwert die Stellgröße ermittelt wird. Die Stellgröße kann dabei entweder aus in der Steuereinrichtung abgespeicherten Kennlinien oder Tabellen entnommen werden. Es besteht jedoch auch die Möglichkeit die Stellgröße bei Bedarf erneut zu berechnen.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung den Kennlinienverlauf für eine erfindungsgemäße beeinflußbare Rückschaltung;
- Figur 2: verdeutlicht allgemein den vorliegenden Kennlinienverlauf bei konventionellen Rückschaltvorgängen für Nullast und Teillast mit den entsprechenden Kenngrößen.

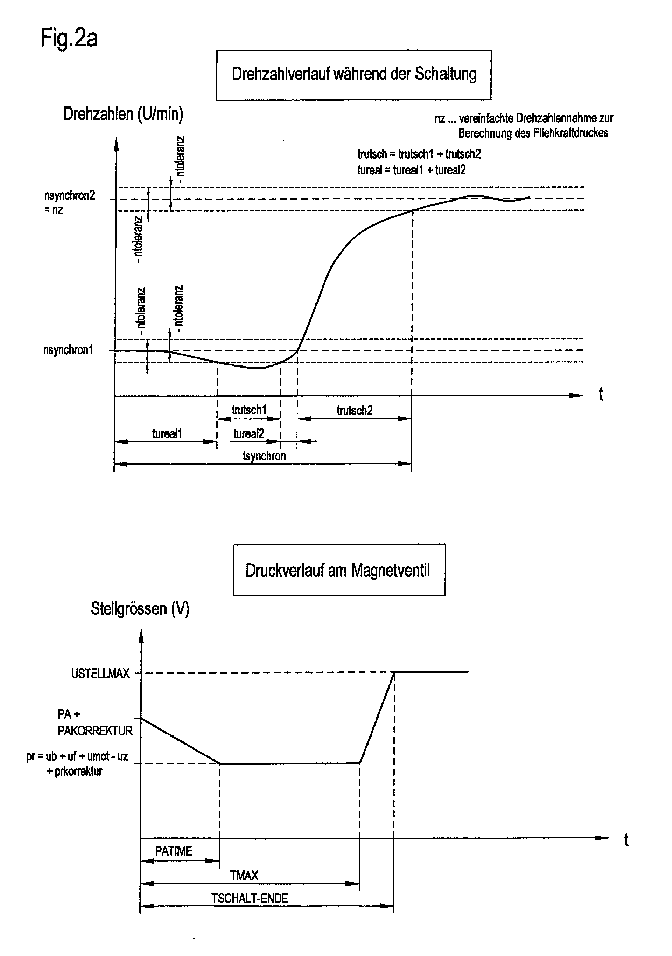

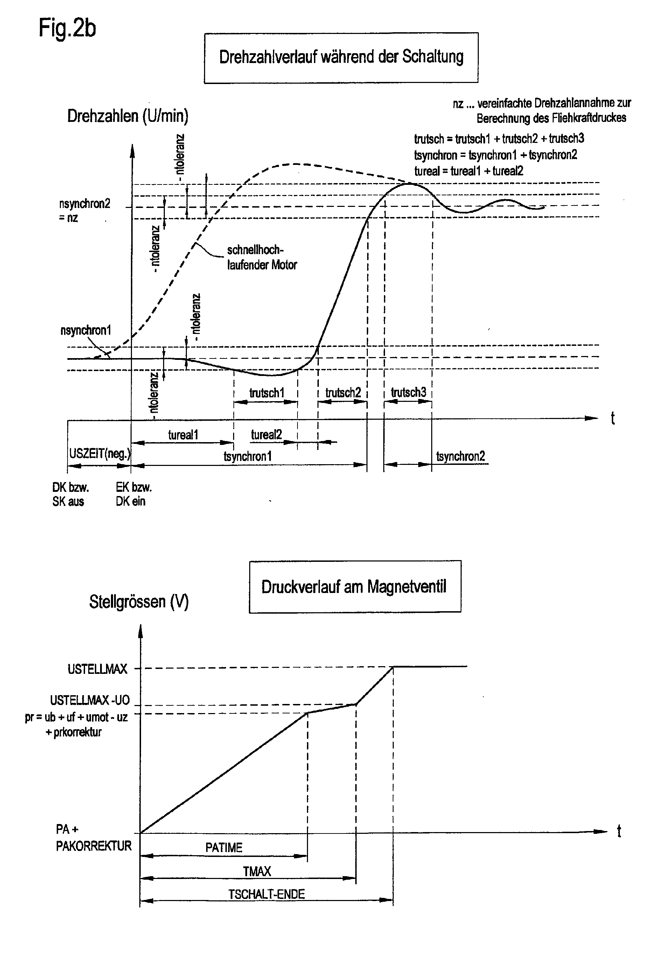

Die Figur 2 verdeutlicht schematisch eine Steuerdruckkennlinie für Rückschaltvorgänge in einem automatischen Getriebe mit wenigstens einem mechanischen Getriebeteil für Nullast (Fig. 2a) und Teillast (Fig. 2b). Dazu ist der Druckverlauf über der Zeit in einem Diagramm aufgetragen. Die einzelnen Werte sind wie folgt bezeichnet:
- USTELLMAX: = Betriebsdruck
- PR: = berechneter Regeldruck
- PA: = Anfangsdruckwert
- PATIME: = Zeit, in welcher der Anfangsdruckwert auf den Regeldruckwert linear oder degressiv ansteigt oder abfällt
- TMAX: = Zeit, nach der der Sicherheitsdruckhochlauf beginnt und nach deren Ablauf der Synchronisiervorgang abgeschlossen sein sollte
- TSCHALT-ENDE: = Zeit, nach der der Betriebsdruck anliegt.

Für den Schaltvorgang sind des weiteren folgende Meß- und Regelgrößen wesentlich:
- nsynchron1: = Motordrehzahl bei Beginn des Schaltvorganges
- nsynchron2: = Motordrehzahl nach Beendigung des Schaltvorganges
- tureal: = Zeit bis zum Beginn des Synchronisiervorganges
- trutsch: = Rutschzeit der Lamellen
- tsynchron: = Zeit nach der der Schaltvorgang abgeschlossen wurde.

Die beiden Diagramme gemäß den Figuren 2a und 2b geben jeweils den Drehzahlverlauf über der Zeit und das Verhalten der Stellgrößen über die Zeit wieder. Aus diesen beiden Diagrammen ist zu entnehmen, daß nach dem Auftreten eines Gangschaltsignales in der Zeitachse zum Zeitpunkt Null die Motordrehzahl bzw. die Antriebsdrehzahl nsynchron1 noch bis zum Erreichen eines Freilaufpunktes, worunter man den Punkt versteht, an dem die dem neuen Gang zugeordneten Reibelemente das volle Moment noch nicht übernehmen und die dem alten Gang zugeordneten Reibelemente lösen, im wesentlichen unverändert bleibt. Ab diesem Freilaufpunkt beginnt die Antriebsdrehzahl n1 abzufallen, während gleichzeitig die Reibelemente schleifen. Die Zeit bis zum Erreichen dieses Freilaufpunktes, der dem Beginn des Synchronisationsvorganges entspricht, ist mit tureal bezeichnet. An diese schließt sich die Rutschzeit der Reibelemente an.

Dem Diagramm, in welchem die Stellgrößen über die Zeit aufgetragen sind, ist der Steuerdruckverlauf am Magnetventil des die Stellelemente der Reibelemente beaufschlagenden Steuerdruckes zu entnehmen.
Der Schaltkomfort ist im wesentlichen durch den Verlauf des Abtriebsmomentes bestimmt. Ein Momentensprung zum Zeitpunkt tsynchron sollte möglichst gering gehalten werden.

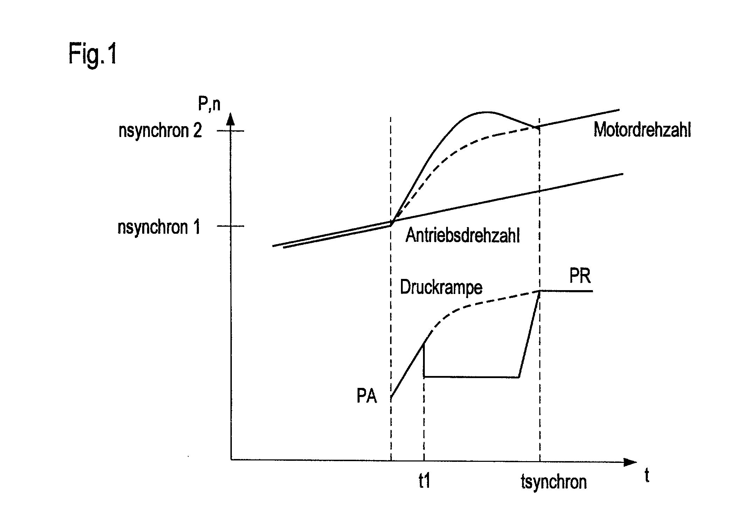

Die Figur 1 verdeutlicht in schematisch vereinfachter Darstellung die beiden Kennlinien, welche sich bei dem erfindungsgemäßen Verfahren der Koppelung der beiden Steuerungskonzepte ergibt. Dabei ist in der Figur 1 das Diagramm für eine Teillastschaltung bzw. Vollastschaltung wiedergibt. Auch hier sind im wesentlichen die folgenden Meßgrößen eingetragen:
- nsynchron1 =: Drehzahl am Getriebeeingang und damit in der Regel eine Drehzahl, welche proportional der Antriebsdrehzahl der Antriebsmaschine ist
- nsynchron2 =: Drehzahl am Abtrieb
- P1 =: Steuerdruck an den Reibelementen

Bei Lastgeberstellung Null wird die Antriebsmaschine mit ihrer Drehzahl nsynchron1 durch den Abtrieb über das Getriebe auf die den Stufensprung höhere Motordrehzahl beschleunigt. Dies erfolgt in der Regel durch ein rasches Ankoppeln bzw. miteinander in Wirkverbindung bringen der Reibelemente der gewünschten zweiten neuen Übersetzungsstufe. Die Antriebsmaschine wird dabei über den Abtrieb mitgeschleppt und somit in ihrer Drehzahl hochgezogen.

Die Figur 1 verdeutlicht anhand von Diagrammen die Gestaltung des Rückschaltvorganges von einer ersten Übersetzungsstufe in eine gewünschte zweite Übersetzungsstufe, in welcher die Antriebsdrehzahl eine höhere Drehzahl bei gleicher übertragbarer Leistung aufweist. Auch hier sind wieder die beiden Synchrondrehzahlen nsynchron1 und nsynchron2 abgetragen. Daraus wird ersichtlich, daß beispielsweise wenn zu einem Zeitpunkt t1, welcher die erste Referenzzeitdauer zwischen der Einleitung eines Schaltvorganges, das heißt dem Auslösen eines Signals für einen gewünschten vorzunehmenden Schaltvorgang und einer bestimmten Zeitspanne nach dem Lösen der Reibelemente der zu verlassenden Übersetzungsstufe bestimmt wird, eine bestimmte Drehzahl der Antriebsmaschine nsynchron1 nicht erreicht wird, der Steuerdruckwert der die Reibelemente beaufschlagenden Stellglieder derart beeinflußt wird, daß die Antriebsmaschine selbst auf die im nächsthöheren Gang erforderliche Drehzahl beschleunigt wird. In strichpunktierten Linien sind dabei die Kennlinien für den Druckverlauf PA und den Drehzahlverlauf ohne Druckbeeinflussung für ein schlechtes Schaltergebnis und in durchgezogener Darstellung der erforderliche Drehzahlverlauf in der zweiten einzustellenden Übersetzungsstufe sowie der dazu erforderliche Steuerdruck dargestellt. Diese sind jeweils mit nsynchron1- und PAgekennzeichnet. Die Referenzzeitdauer ist mit t1 bezeichnet.

Auf welche Art und Weise die Druckbeeinflussung insbesondere des Steuerdruckes erfolgt, liegt dabei im Ermessen des Fachmannes und hängt in der Regel auch von weiteren Anforderungen an den zu realisierenden Schaltvorgang ab. Wie bereits im einleitenden Teil ausgeführt, kann die Steuerdruckbeeinflussung durch einfache Steuerung, Regelung oder adaptive Beeinflussung für Rückschaltvorgänge gleichen Typs vorgenommen werden. Die Auswahl der Möglichkeiten der Beeinflussung des Steuerdruckes liegt dabei im Ermessen des zuständigen Fachmannes. Erfindungswesentlich ist lediglich, daß nach Lösen der Wirkverbindung der Reibelemente einer zu verlassenden Übersetzungsstufe das Beschleunigungsverhalten der Antriebsmaschine, insbesondere das Drehzahlverhalten überwacht wird. Zumindest wird das Drehzahlverhalten zu einem Referenzzeitpunkt ermittelt und mit einem vorgegebenem Referenzwert verglichen, welcher eine Aussage darüber erlaubt, ob die zu diesem Zeitpunkt erforderliche Motorbeschleunigung ausreicht, um die Antriebsmaschine auf die in der einzustellenden Übersetzungsstufe erforderliche Drehzahl zu bringen. Bei diesem Referenzwert kann es sich dabei um einen vorgebbaren Wert handeln, welcher rechnerisch ermittelt wird oder bereits in einer Steuereinrichtung fest abgespeichert ist. Nur wenn der Referenzwert nicht erreicht wird bzw. unterschritten wird, wird die eingeleitete Vollastschaltung als Nullastschaltung weitergeführt und der Steuerdruck der die Reibelemente beaufschlagenden Stellglieder derart beeinflußt, daß die Antriebsmaschine über den Abtrieb, das heißt das Getriebe auf die höhere Drehzahl gebracht wird.

## Patentansprüche

1. Verfahren zur Verbesserung der Qualität von Rückschaltvorgängen zwischen zwei unterschiedlichen Übersetzungsstufen durch Betätigung von miteinander in Wirkverbindung bringbaren Reibelementen in Fahrzeuggetrieben in Antriebssträngen mit wenigstens noch einer Antriebsmaschine;
1.1 bei welchem in Abhängigkeit einer den aktuellen Lastzustand wenigstens mittelbar charakterisierenden Größe nach Lösung der Wirkverbindung der Reibelemente der ersten zu verlassenden Übersetzungsstufe eine Stellgröße zur Beaufschlagung der Reibelemente der gewünschten einzustellenden zweiten Übersetzungsstufe derart einstellbar ist, daß bei einem Lastzustand von Null die Antriebsmaschine durch Koppelung mit der Abtriebseite auf die in der zweiten Überetzungsstufe erforderliche Drehzahl gebracht wird und in einem Lastzustand 0 die Stellgröße derart beeinflußt wird, daß die Antriebsmaschine die erforderliche Drehzahl in der zweiten Übersetzungsstufe durch Hochlaufen erreicht;
**gekennzeichnet durch** die folgenden Merkmale:
1.2 bei Vorlage einer, den aktuellen Lastzustand von 0 wenigstens mittelbar charakterisierenden Größe und gelöster Wirkverbindung der Reibelemente der zu verlassenden Übersetzungsstufe wird eine, das Beschleunigungsverhalten der Antriebsmaschine wenigstens mittelbar charakterisierende Größe für wenigstens einen bestimmten vorgebbaren Referenzzeitraum ermittelt und mit einem Referenzwert für die die Beschleunigung wenigstens mittelbar charakterisierende Größe verglichen;
1.3 bei Vorliegen einer Abweichung zwischen der das Beschleunigungsverhalten der Antriebsmaschine wenigstens mittelbar charakterisierenden Größe und dem Referenzwert, welche auf ein Nichterreichen des erforderlichen Drehzahlwertes in der zweiten einzustellenden Übersetzungsstufe hindeutet, wird die Stellgröße für die Realisierung der Wirkverbindung der Reibelemente derart beeinflußt bzw. eingestellt, daß die Antriebsmaschine vom Abtrieb hochgezogen wird.

2. Verfahren nach Anspruch 1, **dadurch gekennzeichnet, daß** die das Beschleunigungsverhalten wenigstens mittelbar charakterisierende Größe durch das Drehzahlverhalten der Antriebsmaschine über einen bestimmten Referenzzeitwert charakterisiert ist.

3. Verfahren nach Anspruch 1, **dadurch gekennzeichnet, daß** die die Beschleunigung wenigstens mittelbar charakterisierende Größe von einer Drehzahl der Antriebsmaschine zu einem bestimmten Referenzzeitpunkt gebildet wird.

4. Verfahren nach einem der Ansprüche 1 bis 3, **dadurch gekennzeichnet, daß** die Beschleunigung der Antriebsmaschine wenigstens mittelbar charakterisierende Größe nach einer bestimmten Zeitdauer nach Einleitung des Schaltvorganges, welcher durch das Lösen der Reibelemente der zu verlassenden Übersetzungsstufe charakterisiert ist, ermittelt wird.

5. Verfahren nach Anspruch 4, **dadurch gekennzeichnet, daß** die Zeitdauer so gewählt ist, daß noch eine rechtszeitige Synchronisation möglich ist.

6. Verfahren nach einem der Ansprüche 1 bis 5, **dadurch gekennzeichnet, daß** die Stellgröße zur Beaufschlagung der miteinander in Wirkverbindung bringbaren Reibelemente ein zu erzeugender Druckwert ist.

7. Verfahren nach Anspruch 6, **dadurch gekennzeichnet, daß** die Stellgröße vom Regeldruckwert gebildet wird.

8. Verfahren nach einem der Ansprüche 1 bis 7, **dadurch gekennzeichnet, daß** die Stellgröße gesteuert wird.

9. Verfahren nach Anspruch 8, **gekennzeichnet durch** die folgenden Merkmale:
9.1. bei welchen zur Realisierung gleicher Rückschaltvorgänge zwischen den gleichen Übersetzungsstufen bei einer Vielzahl von derartigen Schaltvorgängen ein aktueller Ist-Wert wenigstens einer, den Schaltvorgang charakterisierenden Größe bei jedem dieser Schaltvorgänge ermittelt wird und
9.2 der Ist-Wert mit einem festlegbaren und/oder speicherbaren Soll-Wert verglichen wird und
9.3 bei Abweichung des Ist-Wertes vom Soll-Wert der Steuerdruck zur elektro-hydraulischen Beaufschlagung der Reibelemente zur wenigstens mittelbaren Beeinflussung der den Schaltvorgang charakterisierenden Größe um einen bestimmbaren, berechenbaren oder vorgebbaren ersten Korrekturwert adaptiv zur Erzielung eines optimalen Schaltverhaltens geändert wird und der Verlauf der geänderten Größe jeweils als neue Kennlinie für die einzustellenden Soll-Werte abspeicherbar ist.

10. Verfahren nach einem der Ansprüche 1 bis 9, **dadurch gekennzeichnet, daß** die Stellgröße entsprechend eines vorgebbaren Steuerdruckverlaufes an den Reibelementen geregelt wird..
